# EUROPÄISCHE PATENTANMELDUNG

(11) **EP 2 654 277 A2**
(43) Veröffentlichungstag der Anmeldung: **23.10.2013**
(21) Anmeldenummer: 13164406.4
(22) Anmeldetag: 19.04.2013
(51) Int. Cl.: H04M 1/725

(54) **Verfahren zum Ausgeben mindestens einer Bedieninformation für ein Produkt**

(30) Priorität: 20.04.2012 DE 102012206536
(71) Anmelder: Neubauer, Hans-Ulrich, 74632 Neuenstein (DE)
(72) Erfinder: Neubauer, Hans-Ulrich, 74632 Neuenstein (DE)
(74) Vertreter: Patentanwälte Ruff, Wilhelm, Beier, Dauster & Partner

(57) **Zusammenfassung**

Die Erfindung betrifft ein Verfahren zum Ausgeben mindestens einer Bedieninformation für ein Produkt, ein Computerprogramm zur Durchführung des Verfahrens auf einem Kommunikationsgerät. Die Erfindung betrifft weiter eine Vorrichtung zum Ausgeben mindestens einer Bedieninformation umfassend ein Kommunikationsgerät mit einer Anzeigeeinrichtung, die zum Ausgeben mindestens einer Bedieninformation für ein Produkt ansteuerbar ist. Dabei ist vorgesehen, dass mindestens ein erstmaliger Zugriff auf das Produkt mittels Zugriffcode geschützt wird, mindestens eine Anfrage mit der mindestens einen Bedieninformation an dem Kommunikationsgerät ausgegeben wird, mindestens eine Antwort eines Nutzers auf die mindestens eine Anfrage erfasst und geprüft wird und bei festgestellter Korrektheit der mindestens einen Antwort der Zugriffscode für das Produkt an dem Kommunikationsgerät optisch, akustisch und/oder als Datensignal ausgeben wird.

## Beschreibung

Die Erfindung betrifft ein Verfahren zum Ausgeben mindestens einer Bedieninformation für ein Produkt, ein Computerprogramm zur Durchführung des Verfahrens auf einem Kommunikationsgerät. Die Erfindung betrifft weiter eine Vorrichtung zum Ausgeben mindestens einer Bedieninformation umfassend ein Kommunikationsgerät mit einer Anzeigeeinrichtung, die zum Ausgeben mindestens einer Bedieninformation für ein Produkt ansteuerbar ist.

Als Bedieninformationen für ein Produkt wird ein Warnhinweis oder eine Anleitung zur richtigen Verwendung, Behandlung und/oder Montage eines Gerätes oder eines Produkts bezeichnet. Mehrer Bedieninformationen sind üblicherweise in einer Bedienungsanleitung zusammengefasst, welche einem Nutzer oder Käufer des Produkts in gedruckter Form zur Verfügung gestellt wird. Aufgrund der zunehmenden Verbreitung elektronischer Medien und/oder um Druckkosten zu sparen, werden vielen Produkten zwischenzeitlich Bedieninformationen nicht mehr in gedruckter Form, sondern auf einem Speichermedium, wie CD oder DVD, beigefügt. Für andere Produkte werden Bedieninformationen im Internet bereitgestellt. Anstelle des Begriffs Bedienungsanleitung werden u.a. auch die Begriffe Bedienungsanweisung, Gebrauchsanleitung, Bedienanleitung oder Betriebsanleitung verwendet.

Aus der DE 10 2006 049 965 A1 ist ein Verfahren zum Ausgeben von Bedieninformationen für Objekte eines Fahrzeugs auf einer tragbaren Vorrichtung, beispielsweise einem Mobiltelefon oder einem persönlichen digitalen Assistenten (PDA), bekannt. An der tragbaren Vorrichtung sind Informationen zu den Objekten des Fahrzeugs hinterlegt. Durch bildliches Erfassen eines Objekts mittels der tragbaren Vorrichtung ist ein Objekt auswählbar, für welches eine Bedieninformation gewünscht ist. Die Bedieninformation für das erkannte Objekt wird dann an einer Anzeigevorrichtung der tragbaren Vorrichtung ausgegeben.

Für ein Verkehrbringen von Geräten oder Produkten sind verschiedene Sicherheitsanforderungen zu beachten. Ein Mindestmaß an Sicherheitsanforderungen ist in vielen Ländern durch gesetzliche Bestimmungen oder Richtlinien festgelegt. Die Bedienungsanleitung soll dazu dienen, den Verbraucher über alle möglichen Gefährdungen seiner Sicherheit, die sich aus dem Gebrauch oder der vorhersehbaren und vermeidbaren Falschanwendung ergeben, hinreichend aufzuklären. Es hat sich gezeigt, dass viele Verbraucher nur einen Bruchteil der möglichen Funktionen eines Geräts verwenden.

Unabhängig davon, ob eine Bedieninformation an einem Kommunikationsgerät oder in Papierform einem Nutzer zur Verfügung gestellt wird, muss sichergestellt sein, dass der Nutzer notwendige Informationen für einen sicheren Gebrauch des Geräts oder Produkts erhält. Insbesondere muss sichergestellt sein, dass der Nutzer Warn- und/oder Sicherheitshinweise erhält und von diesen Kenntnis nimmt. Viele Bedienungsanleitung in gedruckter oder elektronischer Form werden jedoch durch den Nutzer nicht beachtet.

Es ist daher eine Aufgabe der Erfindung ein Verfahren zum Ausgeben von Bedieninformationen für ein Produkt an einem Kommunikationsgerät mit einer Anzeigevorrichtung zu schaffen, mit welcher die Wahrscheinlichkeit einer Wahrnehmung der Bedieninformationen für das Produkt erhöht wird. Es ist eine weitere Aufgabe, ein Computerprogramm mit Programmcodemitteln zum Durchführen eines entsprechenden Verfahrens zu schaffen. Schließlich ist es eine Aufgabe, eine Vorrichtung zum Ausgeben von Bedieninformationen für ein Produkt umfassend ein Kommunikationsgerät mit einer Anzeigeeinrichtung, die zum Ausgeben einer Bedieninformationen für ein Produkt ansteuerbar ist, zu schaffen, durch welche eine Wahrscheinlichkeit der Wahrnehmung der Bedieninformationen für das Produkt erhöht wird.

Gemäß einem ersten Aspekt wird ein Verfahren zum Ausgeben mindestens einer Bedieninformation für ein Produkt an einem Kommunikationsgerät mit einer Anzeigevorrichtung, insbesondere an einem mobilen Kommunikationsgerät geschaffen, wobei mindestens ein erstmaliger Zugriff auf das Produkt mittels Zugriffcode geschützt wird, eine Anfrage mit der mindestens einen Bedieninformation an dem Kommunikationsgerät ausgegeben wird, eine Antwort eines Nutzers auf die Anfrage erfasst und geprüft wird und bei festgestellter Korrektheit der Antwort der Zugriffscode für das Produkt an dem Kommunikationsgerät optisch, akustisch und/oder als Datensignal ausgeben wird.

Als Kommunikationsgeräte werden im Zusammenhang mit der Anmeldung Vorrichtungen bezeichnet, die mindestens eine Schnittstelle zur Erfassung und Ausgabe von Informationen aufweisen. Je nach Gestaltung weist das Kommunikationsgerät weiter Einrichtungen zur Verarbeitung erfasster Informationen auf oder kommuniziert zu diesem Zweck mit einer externen Recheneinrichtung oder dergleichen. Als mobile Kommunikationsgeräte werden insbesondere sogenannte Smartphones, Tablet-PCs, PDAs oder dergleichen bezeichnet.

Als Produkt wird im Zusammenhang mit der Anmeldung eine beliebige Vorrichtung, insbesondere ein Gerät, wie beispielsweise ein Elektrogerät oder ein Haushaltsgerät, ein Apparat, eine Maschine, ein Werkzeug, eine Anlage oder dergleichen, bezeichnet.

Die Bedieninformation kann das Produkt als Ganzes oder eine bestimmte Funktionalität des Produkts betreffen. Vorzugsweise werden mehrere Bedieninformationen ausgegeben. In einer Ausgestaltung ist eine Bestätigung, dass mehrere Bedieninformationen wahrgenommen wurden, in Form von einer Anfrage und einer zugehörigen Antwort möglich. In anderen Ausgestaltungen sind mehrere Antworten notwendig, damit ein Zugriffscode ausgegeben wird. Als Ausgabe der Anfrage "mit" der Bedieninformation wird im Zusammenhang mit der Anmeldung eine gleichzeitige Ausgabe, beispielsweise eine gleichzeitige Anzeige an einer Anzeigevorrichtung, oder eine zeitversetzte Ausgabe bezeichnet. Eine Zeitverzögerung ist in vielen Fällen vorteilhaft, um die Aufmerksamkeit des Nutzers auf die Bedieninformationen zu lenken.

Das Produkt weist in einer Ausgestaltung eine Steuereinrichtung zum Steuern und/oder Ausführen mindestens einer Funktion des Produkts auf, welche durch einen Zugriffscode geschützt ist. In anderen Ausgestaltungen ist das Produkt im zusammengebauten oder zerlegten Zustand in einer Verpackung eingebettet, welche einen Zugriff auf das Produkt verhindert, wobei die Verpackung nur unter Verwendung des Zugriffscodes ohne Zerstörung des Produkts entfernt werden kann.

Durch die Eingabe der Antwort bestätigt der Nutzer, dass er Kenntnis der Bedieninformation erlangt hat. Dadurch ist die Wahrscheinlichkeit erhöht, dass die Bedieninformation durch den Nutzer tatsächlich wahrgenommen wird.

Die Bedieninformation ist in einer Ausgestaltung in mehrere Teile gegliedert, welche aufeinanderfolgend ausgegeben werden, wobei erst nach Ausgabe des letzten Teils der Zugriffscode ausgegeben wird. Die Zahl der Teile sollte jedoch gering gehalten werden, um eine Ermüdung des Nutzers zu verhindern.

Die Anfrage ist in einer Ausgestaltung als Abfrage eines beim Verkauf des Produkts an den berechtigten Nutzer übermittelten Kontrollcodes gestaltet. Dadurch wird gleichzeitig eine Sicherheit gegen Diebstahl realisiert. Zu diesem Zweck ist in einer Ausgestaltung jedem Produkt ein individueller Zugriffscode zugeordnet. In anderen Ausgestaltungen sind bestimmte Produkttypen durch einen übereinstimmenden Zugriffscode geschützt.

In einer alternativen Ausgestaltung ist als Antwort ein Teil der übermittelten Bedieninformation durch den Nutzer eingebbar. Dadurch ist eine Abfrage insbesondere sicherheitsrelevanter übermittelter Bedieninformationen möglich.

In einer Ausgestaltung wird der Zugriffcode an dem Kommunikationsgerät optisch und/oder akustisch ausgegeben, wobei der Zugriffscode anschließend durch den Nutzer an einer geeignet gestalteten Schnittstelle des Produkts eingebbar ist.

In vorteilhaften Ausgestaltungen ist vorgesehen, dass der Zugriffscode als Datensignal an das Produkt über eine Datenleitung und/oder drahtlos gesendet wird. Dadurch ist keine weitere Interaktion durch den Nutzer notwendig. Die Übertragung der Daten erfolgt insbesondere bei einer drahtlosen Übertragung in vorteilhaften Ausgestaltungen verschlüsselt. Bei Verwendung eines übereinstimmenden Zugriffscodes für bestimmte Produkttypen ist eine gleichzeitige Freischaltung mehrerer Produkte, beispielsweise im Anschluss an eine Produktschulung möglich.

Die Bedieninformationen sind in Form von Texten optisch und/oder akustisch ausgebbar. Dabei ist in vorteilhaften Ausgestaltungen eine Sprachwahl für die Ausgabe durch einen Nutzer möglich.

In vorteilhaften Ausgestaltungen wird die mindestens eine Bedieninformation zumindest teilweise in graphischer Form, insbesondere als dreidimensionale-Animation (3D-Animation), an dem Kommunikationsgerät ausgegeben. Als Animation wird im Zusammenhang mit der Anmeldung ein beliebiges Wiedergabeverfahren bezeichnet, bei welchem für den Nutzer ein bewegtes Bild geschaffen wird. Die Animation ist in einer Ausgestaltung in Form einer Video-Datei hinterlegt. In anderen Ausgestaltungen ist die Animation in Form von Einzelbildern hinterlegt, welche in nacheinander angezeigt werden, sodass der Eindruck eines bewegten Bilds geschaffen wird. Insbesondere komplizierte Handgriffe für eine Bedienung eines Produkts können so einem Nutzer einfach erläutert werden. Außerdem wird durch optisch ansprechende Gestaltung eine Wahrscheinlichkeit erhöht, dass ein Nutzer sich intensiv mit einer Funktionalität eines Produkts beschäftigt.

In einer weiteren Ausgestaltung ist vorgesehen, dass eine Eingabe mindestens eines Steuerbefehls durch einen Nutzer während der Ausgabe der Bedieninformation erfasst wird, sodass durch einen Nutzer eine Ausgabe der Bedieninformation interaktiv steuerbar ist. Dadurch ist die Informationsübermittlung durch den Nutzer individuell beeinflussbar. Der Nutzer kann so bestimmte Bedieninformationen gezielt abfragen oder zusätzliche Bedieninformation für bestimmte Funktionalitäten abfragen. Die Ausgabe der Bedieninformation erfolgt in einer vorteilhaften Ausgestaltung derart, dass eine spielerische Wissensvermittlung stattfindet. Bei der Übermittlung von Bedieninformationen findet ein Paradigmenwechsel statt. Früher galt die Annahme, dass Bedieninformationen in möglichst knapper Form an den Nutzer übermittelt werden sollen. Es hat sich jedoch gezeigt, dass unter geeigneter Anleitung viele Nutzer Freude daran finden, sich intensiv mit ihrem Produkt zu beschäftigen. Durch interaktive Beeinflussung der angezeigten Bedieninformationen lässt sich so die Akzeptanz der Informationsübermittlung weiter steigern.

In einer Ausgestaltung ist vorgesehen, dass eine Bedieninformation für das Produkt über ein Netzwerk an dem Kommunikationsgerät zur Verfügung gestellt wird. Die Bedieninformation wird beispielsweise durch einen Hersteller verwaltet. Dadurch ist eine kontinuierliche Aktualisierung der Bedieninformationen möglich, beispielsweise aufgrund veränderter Anforderungen an zu übermittelnde Warnhinweise für ein bestimmtes Produkt. Zudem ist ein Speicheraufwand an dem Kommunikationsgerät reduzierbar. Dies ist insbesondere relevant, wenn Bedieninformationen in graphischer Form ausgegeben werden.

In einer weiteren Ausgestaltung ist vorgesehen, dass eine Bedieninformation für das Produkt an eine Druckeinrichtung gesendet wird. Anforderungen an eine Wiedergabe von Bedieninformationen an einer Anzeigeeinrichtung unterscheiden sich üblicherweise von Anforderungen an eine Ausgabe in gedruckter Form. In vorteilhaften Ausgestaltung wird daher die Bedieninformation als Reaktion auf einen entsprechenden Druckbefehl des Nutzers in ein für den Druck geeignetes Format übersetzt. Der Druckdatei können dabei auch Produktdaten wie Seriennummer, Fertigungsort etc. beigefügt werden, sodass für ein bestimmtes Produkt eine individuelle Bedienungsanleitung geschaffen wird. Dabei ist es auch denkbar, dass ein Ausdruck der Bedienungsanleitung und eine Freischaltung des Geräts bei einem Verkauf des Produkts, beispielsweise an einer Kasse, erfolgt.

Gemäß einem zweiten Aspekt wird ein Computerprogramm mit Programmcodemitteln, um alle Schritte eines erfindungsgemäßen Verfahrens durchzuführen, wenn das Computerprogramm auf einem Kommunikationsgerät, insbesondere in einem mobilen Kommunikationsgerät ausgeführt wird, geschaffen.

Als Programmcodemittel werden in Form von Soft- und/oder Hardware umgesetzte Mittel bezeichnet, welche die Ausführung des Verfahrens an einem Kommunikationsgerät ermöglichen. Das Computerprogramm ist in vorteilhaften Ausgestaltungen als Anwendung (Engl. Application, kurz App) und/oder als elektronisches Buch (ebook) realisiert, die oder das auf dem Kommunikationsgerät installiert und/oder ausgeführt werden kann.

Schließlich wird gemäß einem dritten Aspekt eine Vorrichtung zum Ausgeben mindestens einer Bedieninformation für ein Produkt umfassend ein Kommunikationsgerät mit einer Anzeigeeinrichtung, die zum Ausgeben der mindestens einen Bedieninformation ansteuerbar ist, geschaffen, wobei mindestens ein erstmaliger Zugriff auf das Produkt mittels Zugriffcode geschützt ist. Die Vorrichtung umfasst mindestens eine Steuereinrichtung, die ausgebildet ist, um die Anzeigeeinrichtung zum Ausgeben mindestens einer Anfrage mit der mindestens einen Bedieninformation anzusteuern, mindestens eine Antwort eines Nutzers an dem Kommunikationsgerät auf die Anfrage zu erfassen und zu prüfen, und bei festgestellter Korrektheit der Antwort einen Zugriffscode an dem Kommunikationsgerät optisch, akustisch und/oder als Datensignal auszugeben.

Die Steuereinrichtung ist in einer Ausgestaltung vollständig in das Kommunikationsgerät integriert. In anderen Ausgestaltungen ist die Steuereinrichtung mehrteilig, wobei mindestens ein Teil der Funktionen extern realisiert ist.

Das Kommunikationsgerät ist in einer Ausgestaltung einem Produkt zugeordnet und beispielsweise in einer Steuereinheit einer Maschine oder einer Anlage integriert. Dies ist insbesondere für Produkte mit einer Mensch-Maschine-Schnittstelle, wie Fahrzeuge, Maschinen und/oder Anlagen, welche im Zusammenhang mit der Anmeldung ebenfalls als Produkt bezeichnet werden, zweckmäßig. In anderen Ausgestaltungen ist das Kommunikationsgerät ein mobiles Kommunikationsgerät, auf welchem notwendige Programme zur Ausgabe und Abfrage von Daten als Anwendung installiert sind.

In einer vorteilhaften Ausgestaltung weist das Kommunikationsgerät mindestens eine Schnittestelle zur Eingabe von mindestens einem Steuerbefehl durch einen Nutzer auf, wobei eine Eingabe während der Ausgabe der Bedieninformation erfassbar ist, sodass durch einen Nutzer eine Ausgabe der Bedieninformation interaktiv steuerbar ist.

Die mindestens eine Schnittstelle ist in vorteilhaften Ausgestaltungen als Sensorbildschirm gestaltet. Die Anzeigeeinrichtung und die Schnittstelle sind dabei vorzugsweise als gemeinsames Bauteil gestaltet, wobei in einer Ausgestaltung nur Teilbereiche der Anzeigeeinrichtung als Sensorbildschirm gestaltet sind. An dem Sensorbildschirm sind die Bedieninformationen in einer Ausgestaltung in graphischer Form anzeigbar, wobei der Nutzer durch Berührung der dargestellten graphischen Form eine Animation bestimmter Handgriffe startet und/oder die Darstellung für ihn relevanter Bereiche vergrößert und/oder dreht. Dadurch ist eine für den Nutzer besonders ansprechende Form der Wissensvermittlung möglich.

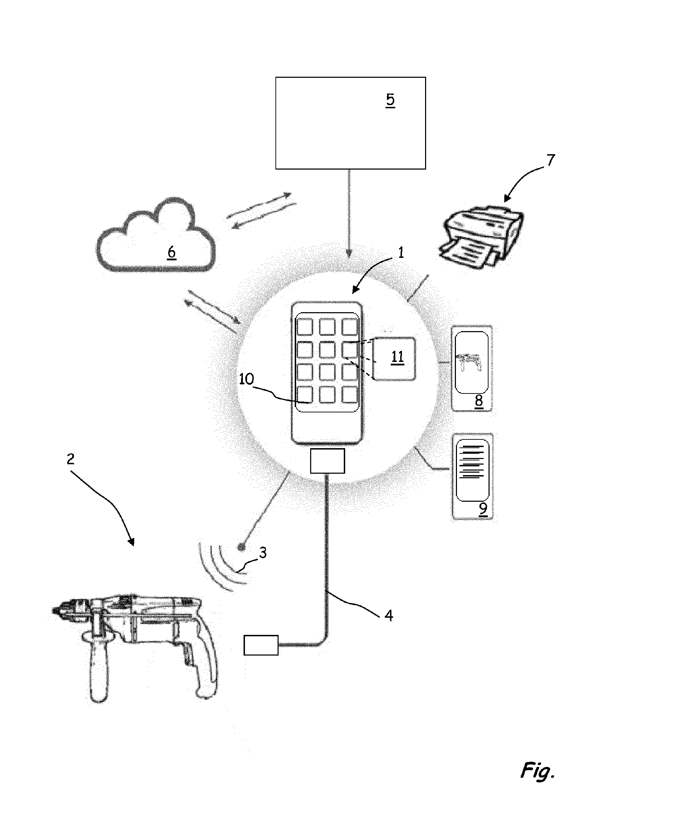

Weitere Vorteile der Erfindung ergeben sich aus den Unteransprüchen und aus der nachfolgenden Beschreibung eines Ausführungsbeispiels der Erfindung, das in der Zeichnung schematisch dargestellt ist.
- Fig.: Übersichtsdarstellung einer Vorrichtung zum Ausgeben mindestens einer Bedieninformation.

Die Figur zeigt schematisch eine Vorrichtung zum Ausgeben mindestens einer Bedieninformation umfassend ein Kommunikationsgerät 1 mit einer Anzeigeeinrichtung 10, die zum Ausgeben mindestens einer Bedieninformation für ein Produkt 2 ansteuerbar ist.

Ein erstmaliger Zugriff auf das Produkt 2 ist mittels Zugriffcode geschützt. Bei dem dargestellten Produkt 2 handelt es sich um ein Elektrowerkzeug. Die Darstellung ist jedoch lediglich beispielhaft. Es sind eine Vielzahl anderer, elektronischer oder nicht-elektronischer Produkte denkbar, welche durch einen Zugriffscode individuell geschützt werden können. Der dem Produkt 2 zugeordnete Zugriffscode verhindert eine Verwendung des Produkts 2.

In dem dargestellten Beispiel ist ein Zugriffscode zur Freigabe des Produkts von dem Kommunikationsgerät 1 an das Produkt 2 drahtlos, beispielsweise mittels schematisch dargestellter Funkwellen 3, oder mittels einer Datenleitung 4 übertragbar.

Das dargestellte Kommunikationsgerät 1 ist ein mobiles Kommunikationsgerät, nämlich ein sogenanntes Smartphone, d.h. ein Mobiltelefon mit zusätzlicher Computerfunktionalität.

Auf dem Kommunikationsgerät 1 ist ein Computerprogramm in Form einer Anwendung 11 (kurz App) installiert, mittels welcher die Anzeigeeinrichtung 10 zum Ausgeben der Bedieninformationen ansteuerbar ist. In einer anderen Ausgestaltung ist ein Computerprogramm in Form eines elektrischen Buchs (ebook) installiert, welches Mittel aufweist, um die Anzeigeeinrichtung zum Ausgeben von Bedieninformationen anzusteuern und/oder mit entsprechenden Mitteln des Kommunikationsgerätes 1 zusammenwirkt.

Die Anwendung 11 oder das ebook wird durch einen Nutzer von einer externen Datenbank 5, beispielsweise einem Onlineshop, bezogen. In einer Ausgestaltung werden alle zur Durchführung der Anwendung 11 notwendigen Daten auf dem Kommunikationsgerät 1 installiert oder gespeichert. In der dargestellten vorteilhaften Ausgestaltung hat die Anwendung 11 zumindest teilweise Zugriff auf ein externes Netzwerk 6, wobei über das Netzwerk 6 dem Kommunikationsgerät 1 Speicher - und/oder Rechenkapazitäten zur Verfügung gestellt werden.

Der Nutzer kann die Bedieninformation auf vielfältige Weise abrufen.

Bei der dargestellten Vorrichtung ist zunächst vorgesehen, dass die Bedieninformationen bedarfsweise an eine Druckeinrichtung 7 gesendet werden kann.

Weiter ist vorgesehen, dass sich der Nutzer die Bedieninformationen zumindest teilweise in graphischer Form 8 ausgeben lässt. Die Ausgabe erfolgt beispielsweise als 3D-Darstellung. Dabei lassen sich insbesondere leicht verständliche Montageanleitungen für den Nutzer ausgegeben. In vorteilhaften Ausgestaltungen erfolgt die Ausgabe animiert.

Alternativ oder zusätzlich ist eine Ausgabe der Bedieninformation in Textform 9, beispielsweise für eine Auflistung notwendiger Zubehörelemente und/oder Ersatzteile vorgesehen.

Durch die verschiedenen Möglichkeiten zum Ausgeben der Bedieninformationen kann ein Nutzer die ihn ansprechende Form individuell wählen, sodass ein Wissenstransfer an den Nutzer durch diesen als positiver, vergnüglicher Zeitvertreib wahrgenommen wird.

Um die Wahrscheinlichkeit zu erhöhen, dass der Benutzer von der Bedieninformation Kenntnis erlangt, wird gemäß der Erfindung mit der Bedieninformation an den Kommunikationsgerät 1 eine Anfrage ausgegeben und eine Antwort eines Nutzers auf die Anfrage erfasst. Die Antwort des Nutzers auf die Anfrage wird geprüft und bei festgestellter Korrektheit der Antwort wird der Zugriffscode für das Produkt 2 ausgegeben.

In dem dargestellten Beispiel wird der Zugriffscode als Datensignal ausgegeben und über Funkwellen 3 oder über eine Datenleitung 4 an das Produkt 2 übertragen.

## Patentansprüche

1. Verfahren zum Ausgeben mindestens einer Bedieninformation für ein Produkt (2) an einem Kommunikationsgerät (1) mit einer Anzeigevorrichtung (10), insbesondere an einem mobilen Kommunikationsgerät, wobei
- mindestens ein erstmaliger Zugriff auf das Produkt (2) mittels Zugriffcode geschützt wird,
- mindestens eine Anfrage mit der mindestens einen Bedieninformation an dem Kommunikationsgerät (1) ausgegeben wird,
- mindestens eine Antwort eines Nutzers auf die mindestens eine Anfrage erfasst und geprüft wird und
- bei festgestellter Korrektheit der mindestens einen Antwort der Zugriffscode für das Produkt (2) an dem Kommunikationsgerät (1) optisch, akustisch und/oder als Datensignal ausgeben wird.

2. Verfahren nach Anspruch 1, **dadurch gekennzeichnet, dass** der Zugriffscode als Datensignal an das Produkt über eine Datenleitung (4) und/oder drahtlos gesendet wird.

3. Verfahren nach Anspruch 1 oder 2, **dadurch gekennzeichnet, dass** die mindestens eine Bedieninformation zumindest teilweise in graphischer Form, insbesondere als dreidimensionale-Animation, an dem Kommunikationsgerät (1) ausgegeben wird.

4. Verfahren nach Anspruch 1, 2 oder 3, **dadurch gekennzeichnet, dass** eine Eingabe mindestens eines Steuerbefehls durch einen Nutzer während der Ausgabe der Bedieninformation erfasst wird, sodass durch einen Nutzer eine Ausgabe der Bedieninformation interaktiv steuerbar ist.

5. Verfahren nach einem der Ansprüche 1 bis 4, **dadurch gekennzeichnet, dass** eine Bedieninformation für das Produkt (2) über ein Netzwerk an dem Kommunikationsgerät (1) zur Verfügung gestellt wird.

6. Verfahren nach einem der Ansprüche 1 bis 5, **dadurch gekennzeichnet, dass** eine Bedieninformation für das Produkt (2) an eine Druckeinrichtung (7) gesendet wird.

7. Computerprogramm mit Programmcodemitteln, um alle Schritte eines Verfahrens nach einem der Ansprüche 1 bis 6 durchzuführen, wenn das Computerprogramm auf einem Kommunikationsgerät (1), insbesondere in einem mobilen Kommunikationsgerät ausgeführt wird.

8. Vorrichtung zum Ausgeben mindestens einer Bedieninformation für ein Produkt (2) umfassend ein Kommunikationsgerät (1) mit einer Anzeigeeinrichtung (10), die zum Ausgeben der mindestens einen Bedieninformation ansteuerbar ist, wobei mindestens ein erstmaliger Zugriff auf das Produkt (2) mittels Zugriffcode geschützt ist, umfassend mindestens eine Steuereinrichtung, die ausgebildet ist, um
- die Anzeigeeinrichtung (10) zum Ausgeben mindestens einer Anfrage mit der mindestens einen Bedieninformation anzusteuern,
- mindestens eine Antwort eines Nutzers an dem Kommunikationsgerät (1) auf die Anfrage zu erfassen und zu prüfen, und
- bei festgestellter Korrektheit der Antwort einen Zugriffscode an dem Kommunikationsgerät (1) optisch, akustisch und/oder als Datensignal auszugeben.

9. Vorrichtung nach Anspruch 8, **dadurch gekennzeichnet, dass** das Kommunikationsgerät (1) mindestens eine Schnittestelle zur Eingabe von mindestens einem Steuerbefehl durch einen Nutzer aufweist, wobei eine Eingabe während der Ausgabe der Bedieninformation erfassbar ist, sodass durch einen Nutzer eine Ausgabe der Bedieninformation interaktiv steuerbar ist.

10. Vorrichtung nach Anspruch 9, **dadurch gekennzeichnet, dass** die mindestens eine Schnittstelle als Sensorbildschirm gestaltet ist.
